# FASCICULE DE BREVET EUROPEEN

(11) **EP 1 259 394 B1**
(45) Date de publication et mention de la délivrance du brevet: **03.01.2007**
(21) Numéro de dépôt: 01911819.9
(22) Date de dépôt: 01.03.2001
(51) Int. Cl.: B60N 2/22, B60N 2/42

(54) **SIEGE DE VEHICULE AUTOMOBILE ADAPTE A RECEVOIR UNE CEINTURE DE SECURITE**
FAHRZEUGSITZ GEEIGNET ZUR AUFNAHME EINES SICHERHEITSGURTES
MOTOR VEHICLE SEAT ADAPTED TO RECEIVE A SAFETY BELT

(30) Priorité: 03.03.2000 FR 0002762; 04.08.2000 FR 0010313
(43) Date de publication de la demande: 27.11.2002
(73) Titulaire: Societe de Recherches d'Etudes et de Valorisation, 27180 Claville (FR)
(72) Inventeur: ECKENDORFF, Jean-Pierre, F-27180 Claville (FR)
(74) Mandataire: Santarelli
(86) Numéro de dépôt international: PCT/FR2001/000611
(87) Numéro de publication internationale: WO 2001/064470

(56) Documents cités:
- DE-A- 19 630 325
- DE-A- 19 648 974
- DE-A- 19 916 361
- FR-A- 2 557 992
- NL-C- 47 716
- US-A- 4 688 662

## Description

La présente invention concerne un siège de véhicule automobile adapté à recevoir une ceinture de sécurité et comportant une partie assise et une partie dossier de part et d'autre d'une zone d'articulation, chacune desdites parties comportant une armature avec deux bras aboutissant à la zone d'articulation, les deux bras formant respectivement longerons d'assise et montants de dossier.

Les mécanismes d'articulation de sièges de véhicule automobile permettant le réglage d'inclinaison de la partie dossier ne sont pas prévus pour supporter les efforts importants transmis par les ceintures de sécurité en cas d'accident. La transmission de tels efforts nécessiterait un surdimensionnement important de ces mécanismes.

C'est la raison pour laquelle, généralement, le point d'ancrage haut de la ceinture n'est pas fixé au siège mais à la caisse du véhicule, généralement ménagé au niveau du plancher par les colonnes latérales, dites de pied-droit, de la structure de carrosserie. Une telle disposition nécessite l'aménagement des points de fixation et un montage séparé et successif des sièges et des ceintures, ce qui augmente les temps d'assemblage sur chaîne de montage.

Le choix du point d'ancrage haut est encore plus difficile pour les sièges amovibles des véhicules de type monospaces ou utilitaires.

Par ailleurs, la position décalée d'un point d'ancrage haut fixé sur la partie dossier par rapport au plan axial du siège favorise la déformation par vrillage de cette partie dossier, réduisant fortement sa capacité d'absorption d'un effort de traction sur le point d'ancrage de la ceinture de sécurité.

Le document DE-A-196 48 974 révèle un siège de véhicule automobile adapté à recevoir une ceinture de sécurité et comportant une partie assise et une partie dossier de part et d'autre d'une zone d'articulation, chacune des dites parties comportant une armure avec deux bras aboutissant à la zone d'articulation, les deux bras formant respectivement longerons d'assise et montants de dossier, les extrémités des deux bras de l'une des dites parties et les extrémités des deux bras de l'autre partie étant montées chacune à rotation par l'intermédiaire d'un pivot dans un palier, le pivot étant porté par une partie et le palier par l'autre partie une traverse tubulaire de raidissement étant ménagée entre les pivots portés par les extrémités du bras de ladite une des parties et un moyen d'absorption d'énergie disposé à l'intérieur de cette traverse. En outre, dans ce siège, le moyen d'absorption comporte une barre de torsion et une noix, cette barre de torsion étant engagée dans un tube emboîté par ses extrémités respectives dans les paliers correspondants.

L'objet de la présente invention est un siège dans lequel l'effort transmis principalement par un seul montant de la partie dossier recevant l'ancrage haut de la ceinture de sécurité est réparti de façon égale sur les deux longerons d'assise du siège pour supporter des efforts dynamiques de l'ordre de 400 décaNewton-mètre ; grâce à cette disposition, les ceintures de sécurité peuvent être montées en formant un sous-ensemble intégral du siège.

Selon l'invention, un siège de véhicule automobile adapté à recevoir une ceinture de sécurité et comportant une partie assise et une partie dossier de part et d'autre d'une zone d'articulation, chacune desdites parties comportant une armature avec deux bras aboutissant à la zone d'articulation, les deux bras formant respectivement longerons d'assise et montants de dossier, les extrémités des deux bras de l'une desdites parties et les extrémités des deux bras de l'autre partie étant montées chacune à rotation par l'intermédiaire d'un pivot dans un palier, le pivot étant porté par une partie et le palier par l'autre partie une traverse tubulaire de raidissement étant ménagée entre les pivots portés par les extrémités du bras de ladite une (20) des parties et un moyen d'absorption d'énergie disposé à l'intérieur de cette traverse le moyen d'absorption d'énergie comportant une barre de torsion et une noix d'accouplement, (siège tel que divulgué par DE-A-19 648 974), est caractérisé par le fait que la barre de torsion se répartit en deux tronçons de part et de la noix, emboîtés chacun par leurs extrémités respectives dans leurs paliers correspondants, l'une au moins de l'extrémité de l'un des tronçons étant solidaire axialement et angulairement de son palier, et ladite barre de torsion étant attelée par la noix d'accouplement à la traverse tubulaire qui l'enveloppe.

Avantageusement, le moyen d'absorption d'énergie comporte deux éléments élastiques adaptés à intervenir, l'un instantanément sans jeu, l'autre de manière différée à la suite d'un débattement déterminé par un jeu.

De préférence, on affecte au moyen élastique intervenant de manière différée un certain jeu dans un sens et un jeu différent dans l'autre.

Avantageusement, la traverse tubulaire de forme globalement cylindrique comporte au moins une rampe hélicoïdale coopérant avec au moins une rainure correspondante ménagée sur la noix d'accouplement, la barre de torsion traversant cette noix avec une section non circulaire bloquant tout mouvement relatif de rotation entre noix et barre, mais permettant leur libre coulissement relatif.

De préférence, la noix étant traversée par un trou taraudé, une vis parallèle à l'axe, libre en rotation mais calée en translation et accessible de l'extérieur par au moins une de ses extrémités constitue un moyen de réglage fin, dit continu, de l'inclinaison de la partie dossier.

Avantageusement, ladite vis est adaptée à être commandée par l'une et/ou l'autre de ses extrémités.

De préférence, la barre de torsion de section de forme non circulaire ayant une de ses extrémités encastrée dans un palier est engagée par l'autre de ses extrémités dans un logement ménagé dans l'autre palier avec une forme semblable mais de dimensions supérieures de façon à bloquer cette extrémité en rotation seulement au delà d'un certain angle de rotation.

Avantageusement, la barre de torsion de section carrée est engagée par son autre extrémité dans un logement de section délimitée par deux carrés centrés sur l'axe et décalés angulairement d'un angle de débattement prédéterminé, le débattement en rotation de chaque sommet de la section de la barre étant délimité par deux portées plates raccordées selon un arc de cercle de diamètre au moins égal à la diagonale de la section du carré de la barre.

De préférence, un écart ménagé entre les distances séparant la noix d'accouplement des deux extrémités de la barre est utilisé comme moyen d'action sur la répartition des contraintes appliquées en cas de chocs sur les longerons d'assise.

Avantageusement, des fourreaux emboîtés dans la traverse tubulaire ou sur la barre de torsion limitent les déplacements axiaux de la noix d'accouplement.

De préférence, des fourreaux montés sur la barre de torsion sont adaptés au guidage de la tige de commande de la noix.

Avantageusement, ladite au moins une rampe hélicoïdale s'étend sur une fraction de la longueur de la traverse.

De préférence, une des extrémités de cette rampe est conformée en butée limitant le déplacement axial de la noix, tandis que l'autre extrémité est conformée pour faciliter l'introduction de la noix.

Avantageusement, un dispositif de sélection manuelle de l'angle d'inclinaison de la partie dossier est interposé entre au moins un des paliers portant ladite une des parties et l'extrémité du bras correspondant de ladite autre partie.

De préférence, le dispositif de sélection de l'angle d'inclinaison de la partie dossier comportant un nombre limité de positions de calage angulaire, le moyen de réglage fin est adapté à couvrir de façon continue une plage de réglage sur une étendue angulaire supérieure à l'écart séparant deux positions successives de calage angulaire du dispositif de sélection.

Avantageusement, le ou chaque moyen d'absorption d'énergie est un élément élastique adapté à subir en cas de choc une déformation permanente.

De préférence, l'élément élastique est divisé en au moins deux parties, l'une au moins de ces parties ayant subi un traitement de modification de sa limite d'élasticité.

Avantageusement, les extrémités des deux montants de la partie dossier étant solidarisées par la traverse de raidissement dont les extrémités, s'étendant à l'extérieur des montants de la partie dossier, forment pivots d'articulation dans deux paliers emboîtés sur lesdites extrémités, chacun de ces paliers présente en relief sur sa face externe un moyen de calage adapté à coopérer par complémentarité de forme avec un moyen de réception ménagé dans la zone d'articulation du longeron d'assise correspondant.

Pour mieux faire comprendre l'objet de l'invention, on va en décrire maintenant, à titre d'exemple, purement illustratif et non limitatif, des modes de réalisation représentés sur les dessins annexés.

Sur ces dessins :
- la figure 1 est une vue en perspective d'un siège selon l'invention ;
- la figure 2 est une vue partielle en coupe de la zone d'articulation du siège de la figure 1 ;
- la figure 3 est une vue selon III-III de la figure 2 ;
- la figure 4 est une vue partielle en coupe d'une variante d'extrémité de la zone d'articulation du siège des figures 1 à 3 ;
- la figure 5 est une vue analogue à la figure 1 et concerne une variante de siège selon l'invention ;
- la figure 6 est une vue partielle en coupe de la zone d'articulation du siège de la figure 5 ;
- la figure 7 est une vue selon VII-VII de la figure 6 ;
- la figure 8 est un diagramme illustrant les positions de réglage de l'inclinaison de la partie dossier par rapport à la partie assise d'un siège selon l'invention ;
- la figure 9 est une vue partielle en bout montrant un moyen de réglage discontinu de la partie dossier ;
- la figure 10 est une vue partielle en coupe par rapport à la figure 9, le cliquet n'étant pas représenté ;
- les figures 11 et 12 sont des vues partielles en coupe montrant des variantes de sections de barre de torsion ;
- les figures 13 et 14 montrent une variante de traverse selon l'invention, la figure 14 étant une vue selon XIV-XIV de la figure 13 ;
- les figures 15 et 16 sont des vues partielles en coupe montrant des moyens de limitation de course de la noix et de guidage de la tige de réglage, respectivement ;
- la figure 17 est une vue partielle illustrant le montage de la partie dossier sur la partie assise ;
- la figure 18 est une vue partielle en coupe par rapport à la figure 17 ;
- les figures 19 et 20 sont des vues analogues aux figures 17 et 18, respectivement, illustrant une variante de montage.

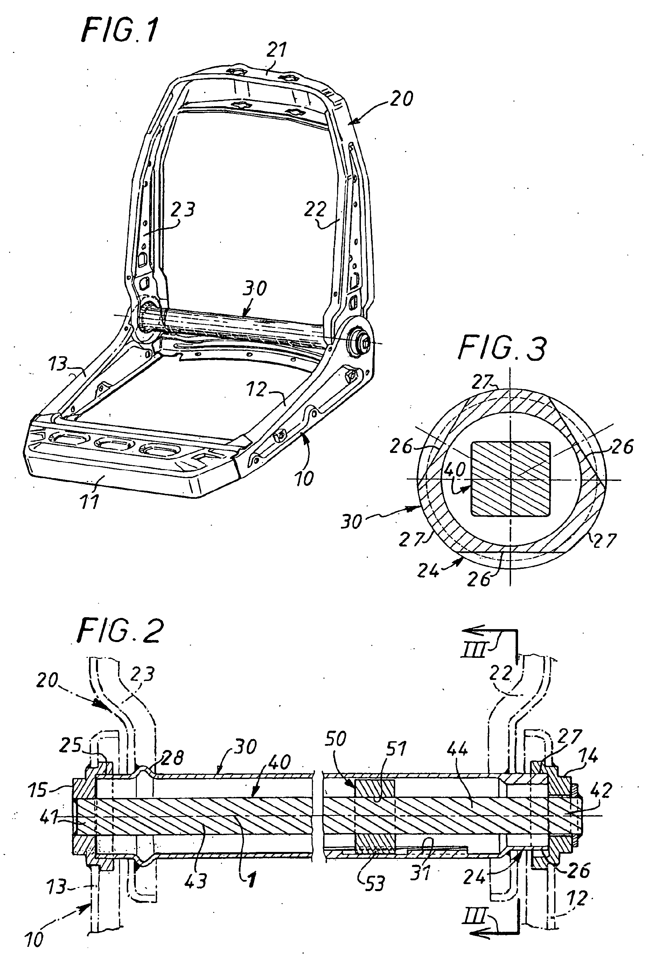

En se reportant aux figures 1 et 2, on voit qu'un siège de véhicule automobile comprend une partie assise 10 et une partie dossier 20.

La partie assise 10 comporte une armature en U dont l'âme 11 relie deux bras formant longerons 12 et 13 ; de manière analogue, la partie dossier 20 comporte une armature en U dont l'âme 21 relie deux bras formant montants 22 et 23.

Les extrémités des deux bras de l'une des parties sont montées à rotation par rapport aux extrémités des deux bras de l'autre partie, respectivement, autour de l'axe 1 d'articulation.

Ici, les extrémités des longerons 12, 13 d'assise portent des paliers 14, 15 dans lesquels sont montés à rotation des pivots 24, 25 portés par les extrémités des montants 22, 23 de dossier.

Dans la forme décrite et représentée, les pivots 24, 25 sont constitués par les extrémités d'une traverse 30 de raidissement reliant les extrémités des montants 22, 23 de la partie dossier 20 auxquelles elle est solidarisée, ici par soudage.

La traverse 30 de forme tubulaire est avantageusement réalisée suivant des techniques de martelage à froid sur mandrin qui permettent de réaliser une telle pièce ayant des surépaisseurs locales avec une bonne précision.

Ici, l'extrémité 24 comprend trois plats 26 entre trois portées 27 cylindriques de tourillonnement ; les plats 26 facilitent le positionnement et le soudage de cette extrémité 24 sur le montant 22. L'autre extrémité de la traverse 30, à savoir l'extrémité 25, est cylindrique et est limitée axialement par un accroissement local 28 de diamètre qui facilite le positionnement et le soudage de cette extrémité 25 sur le montant 23.

Sur au moins une partie de sa longueur, la traverse 30 est munie de nervures internes 31 par exemple au nombre de trois régulièrement réparties à 120 degrés.

Avec ces nervures 31 coopèrent des rainures 53 ménagées à la périphérie externe d'une noix 50.

La noix 50 est solidaire en rotation d'une barre 40 de torsion ; pour ce faire, ici la barre 40 est de section carrée ainsi que le trou traversant 51 de la noix 50 qui reçoit ladite barre 40.

L'une des extrémités de la barre de torsion 40, l'extrémité 41, est solidaire du palier 15, donc ici fixe en rotation, et immobilisée en translation en étant soudée audit palier 15 ; l'autre extrémité 42 est libre en rotation par rapport au palier 14 ; elle peut être arrêtée axialement, comme cela est représenté, par une rondelle soudée en bout de la barre 40 dont l'extrémité 42 émerge par rapport au palier 14.

Ainsi, par l'intermédiaire du palier 15 et de la traverse 30, la barre de torsion 40 constitue un moyen d'absorption d'énergie, via la noix 50, disposé entre les parties dossier 20 et assise 10 et adapté à absorber l'énergie de choc en cas de collision, la partie dossier 20 étant alors sollicitée en déplacement par rapport à la partie assise 10 par la ceinture de sécurité dite embarquée portée par le siège.

Bien entendu, il est possible de faire participer à l'absorption de l'énergie les deux tronçons de la barre 40 disposés de part et d'autre de la noix 50.

Ainsi, selon une première variante non représentée, les deux extrémités 41 et 42 de la barre 40 sont solidaires des paliers 15 et 14, respectivement.

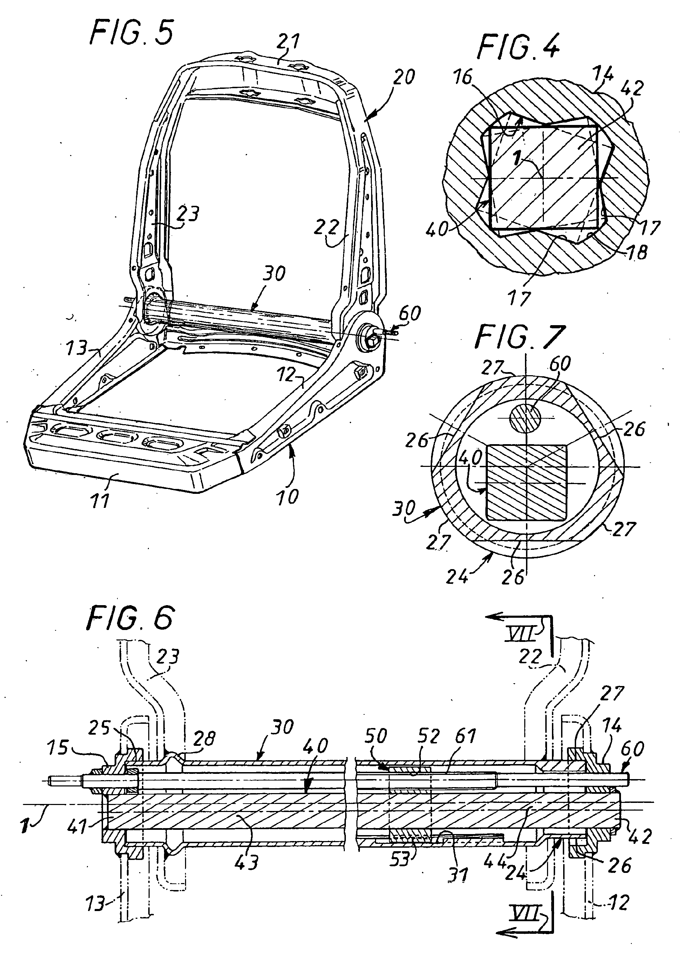

Il est possible également de décaler dans le temps cette participation : la figure 4 montre une variante de palier 14 selon laquelle la section du logement 16 qui reçoit l'extrémité carrée 42 de la barre 40 est délimitée par deux carrés centrés sur l'axe 1 et décalés angulairement d'un angle de débattement déterminé ; ainsi, le débattement de chaque sommet du carré de la section de la barre 40 est limité par deux portées plates 17 avec lesquelles coopèrent les côtés dudit carré ; les portées plates 17 sont raccordées par exemple en 18 selon un arc de cercle, lequel est centré sur l'axe ; bien entendu, le diamètre de ce cercle est au moins égal à la longueur d'une diagonale du carré de la section de la barre 40.

Le débattement ainsi permis est par exemple de 39 degrés ; au repos, la partie dossier est positionnée de telle sorte qu'elle a une possibilité de débattement dans les deux sens ; en cas de choc avant, l'extrémité 42 de la barre trouve le contact d'une face 17 du logement du palier 14 au bout d'un débattement dans les deux sens ; en cas de choc avant, l'extrémité 42 de la barre trouve le contact d'une face 17 du logement du palier 14 au bout d'un débattement de 13° et, en cas de choc arrière, le contact d'une face 17 au bout d'un débattement de 26°.

La partie dossier 20 peut ainsi être amenée à transmettre à la barre 40 via la noix 50 un couple estimé par exemple à 400 décaNewton-mètre sans dépasser un angle maximum par exemple de 26 degrés tant vers l'avant lors d'un choc frontal, que vers l'arrière lors d'un choc arrière.

Selon une forme de réalisation, la noix 50 n'est pas à mi-longueur de la barre 40 : la longueur du tronçon 43, figure 2, dont l'extrémité 41 est montée fixe par rapport au palier 15 est le double de celle du tronçon 44 dont l'extrémité 42 est montée avec possibilité de débattement, figure 4, par rapport au palier 14 ; grâce à cette disposition, le vrillage angulaire d'une barre de torsion étant proportionnel tant au couple à transmettre qu'à la longueur sollicitée de la barre, lors d'un choc avant, après les premiers 13 degrés de débattement, le palier 15 supporte 100 décaNewton-mètre transmis par le premier tronçon 43 tandis que le second tronçon 44 ne transmet aucun couple au palier 14 ; après les 26 degrés de débattement autorisé, le premier tronçon 43 transmet 100 décaNewton-mètre de plus soit au total 200 décaNewton-mètre et le second tronçon 44 étant la moitié du tronçon 43 transmet pour ce même angle de 13 °, compris entre + 13° et + 26°, le même effort de 200 décaNewton-mètre.

En cas de choc arrière, après les 26 degrés de débattement, le premier tronçon 43 transmet 200 décaNewton-mètre tandis que le second tronçon 44 ne transmet aucun couple au palier 14 ; au delà de cet effort, le tronçon 44 arrive en butée à son extrémité 42 et intervient à titre de sécurité.

Comme on le voit, un écart ménagé entre les distances séparant la noix d'accouplement 50 des deux extrémités 41, 42 de la barre 40 est utilisé comme moyen d'action sur la répartition de contraintes appliquées en cas de chocs sur les longerons 12, 13 d'assise.

La disposition selon l'invention présente également l'avantage de permettre un réglage de la position angulaire relative des parties assise 10 et dossier 20.

Ainsi, en se reportant aux figures 5 à 7, on voit que la barre de torsion 40 a été décalée radialement par rapport à l'axe 1 d'articulation pour permettre l'interposition entre elle-même et la paroi interne de la traverse 30 d'un moyen de réglage de la position axiale de la noix 50, ici une tige filetée 60 dont le filetage 61 coopère à vissage avec un taraudage 52 traversant la noix 50 ; avantageusement, les extrémités de la tige de réglage 60 traversent les paliers 14, 15 qu'elles dépassent de façon que la tige 60 puisse être appréhendée d'un côté ou de l'autre du siège.

Ici, les nervures internes 31 de la traverse 30 sont des rampes du type hélicoïdales, ainsi bien entendu que les rainures externes 53 de la noix 50.

Comme il est aisé de le comprendre, en tournant la tige de réglage 60 calée axialement, la noix 50 est déplacée axialement par rapport à la traverse 30 ; grâce aux rampes 31, ladite noix 50, empêchée de tourner par rapport à la barre de torsion 40 calée sur les paliers 14, 15 eux-mêmes calés sur les longerons 12, 13 d'assise, fait tourner la traverse 30, donc les montants 22, 23 auxquels celle-ci est liée.

En choisissant un pas allongé pour les rampes hélicoïdales 31 afin qu'elles aient un angle d'hélice faible absorbant un minimum d'effort et un pas approprié pour la vis permettant une grande démultiplication du déplacement axial de la noix 50, on obtient un réglage angulaire de la partie dossier 20 continu, linéaire et très précis.

Un tel réglage par rotation d'une tige permet d'y adapter aisément des dispositifs connus de réglage de siège à commande électrique.

Lorsque la commande est manuelle, il est souhaitable que la manoeuvre, par exemple d'un bouton moleté, soit effectuée dans le même sens de rotation que celui souhaité de l'inclinaison de la partie dossier. Ce résultat est obtenu très simplement en associant un pas à droite ou à gauche du filetage 61 de la tige filetée 60 avec un pas à droite ou à gauche des rampes hélicoïdales 31 de la traverse 30.

Une telle disposition convient bien pour les sièges équipant des véhicules de transport en commun ayant une partie dossier dont l'angle de réglage est généralement limité.

Pour un angle plus grand, il est avantageux de combiner un réglage continu à tige de réglage tel que ci-dessus et un réglage du type discontinu.

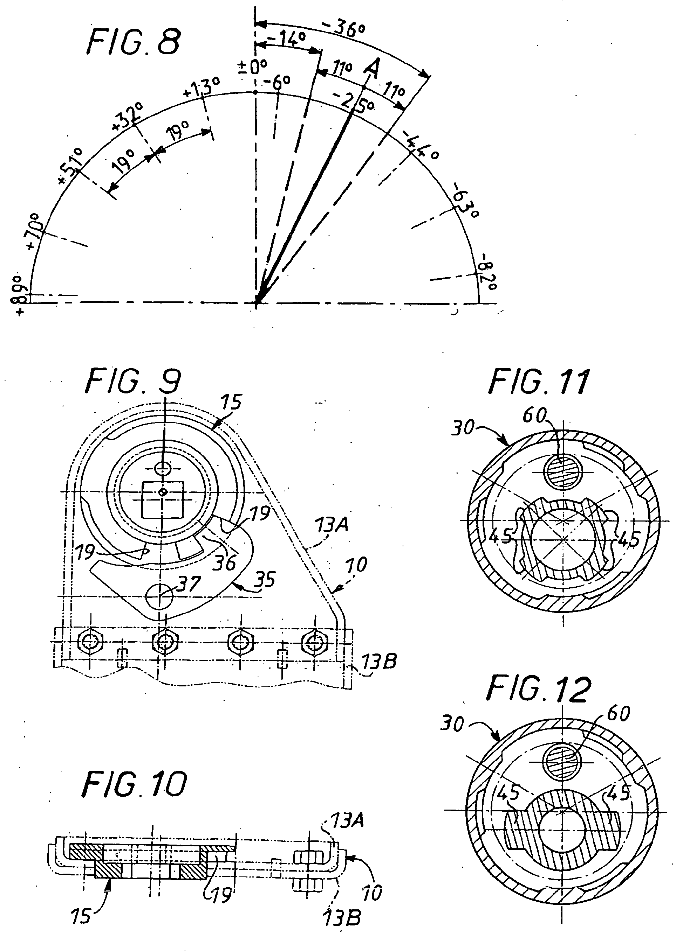

Le diagramme de positions angulaires de la figure 8 montre un exemple d'un réglage mixte manuel de dossier de siège, comportant un réglage discontinu, de type connu en soi, par tranches de 19° et un réglage continu linéaire selon l'invention de plus ou moins 11° à n'importe quelle position, ne nécessitant qu'une commande de plus ou moins 3 tours environ de la tige de réglage. Afin de couvrir la totalité de l'angle de réglage prévu, le réglage continu selon l'invention aura une plage par exemple de 22°, soit légèrement supérieure au pas entre deux positions successives du réglage discontinu, ici par exemple de 19°. L'axe A du pas de référence correspondra préférentiellement à l'angle standard de 25° représentatif de la position habituelle de référence d'un dossier. Le réglage continu permettra de balayer plus ou moins 11° par rapport à cet angle et de couvrir ainsi les positions normales d'utilisation avec un nombre de tours de manoeuvre limité. Pour des déplacements angulaires plus importants en arrière, vers des positions "relax" ou "couchette", ou en avant, notamment pour dégager l'accès aux places arrière dans des véhicules à deux portes, le réglage discontinu pourra être utilisé seul, sans nécessité d'utiliser le réglage continu, qui reste toutefois disponible pour corriger le calage du réglage discontinu. Une mémorisation est avantageusement prévue pour arrêter automatiquement le dossier dans la position standard de 25°. On peut également envisager un verrouillage du réglage continu de façon qu'il ne puisse être utilisé que pour la position standard de 25°, dans les plages de plus ou moins 11 °.

Les figures 9 et 10 montrent succinctement un exemple de dispositif de réglage discontinu.

Sur ces figures, un longeron de la partie assise 10, ici en deux pièces 13A et 13B, porte un palier 15 lequel n'est pas fixé rigidement audit longeron mais peut être immobilisé par rapport à lui dans diverses positions, ici dans deux positions : pour ce faire, deux échancrures 19 sont adaptées à recevoir le bec 36 d'un cliquet 35 monté à rotation autour d'un axe 37.

Grâce à la présence du réglage continu décrit ci-dessus, les positions correspondant au réglage discontinu peuvent être espacées l'une de l'autre en sorte que, dans l'exemple représenté, le bec 36 et la matière qui sépare les échancrures 19 peuvent avoir un développement circonférentiel important en sorte que les efforts induits lors d'un choc peuvent être supportés.

Dans les exemples décrits et représentés, la barre de torsion 40 est pleine et de section carrée ; bien entendu, des variantes sont possibles.

Il suffit évidement que sa paroi externe ne soit pas circulaire ; les figures 11 et 12 montrent des barres de torsion creuses à cannelures 45 longitudinales, quatre cannelures figure 11 ou deux cannelures figure 12.

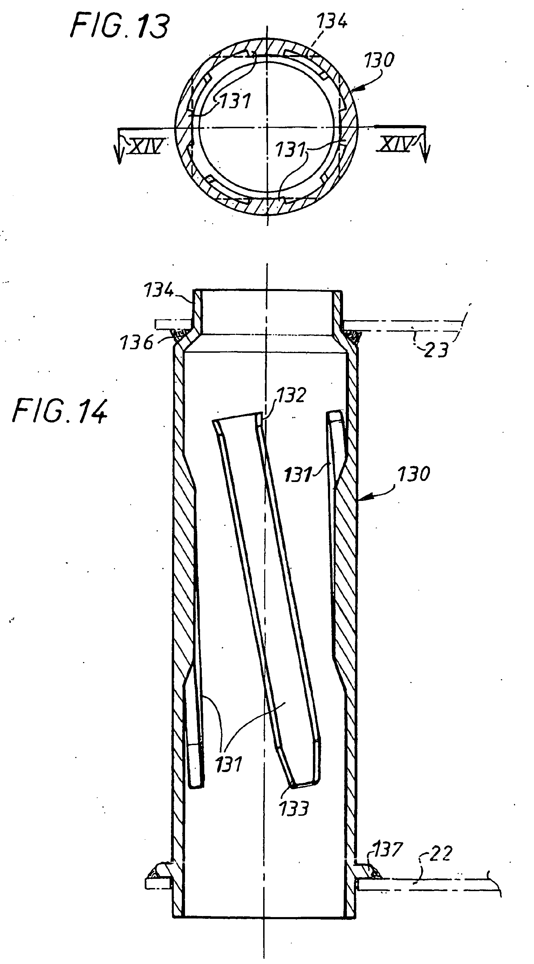

Les figures 13 et 14 montrent une variante de traverse. Ici, une traverse 130, réalisée suivant les techniques de martelage à froid sur mandrin, comprend quatre rampes hélicoïdales 131 s'étendant sur une partie de la longueur de la traverse 130 ; une extrémité 132 des rampes 131 est élargie en sorte de former une butée de fin de course pour la noix 50, tandis que l'autre extrémité 133 est chanfreinée pour faciliter l'engagement de ladite noix 50.

Une section polygonale 134 est aménagée à une extrémité de la traverse 130 par une opération de retreint sur un mandrin cylindrique pour former un pivot ; cette extrémité est à épaisseur variable, plus grande aux angles du polygone qu'au milieu des faces planes.

La section polygonale est indexée par rapport aux rampes 131 pour que la partie dossier 20 après montage soit inclinée vers l'arrière de 25 degrés par rapport à la verticale, comme c'est l'usage.

Dans l'exemple représenté, la section polygonale 134 est un carré avec des angles arrondis servant de pivot, visible en pointillés sur la figure 13 ; les quatre rampes 131 et le carré étant disposés selon une symétrie de révolution, la mise en place de la traverse 130 peut se faire indifféremment selon quatre de ses positions angulaires.

Ainsi, avantageusement, la section polygonale est un polygone ayant un nombre de faces égal au nombre de rampes régulièrement réparties circonférentiellement.

Les raccordements 136 selon lesquels la section polygonale 134 se raccorde à la surface externe de la traverse 130 forment butée de positionnement axial de celle-ci par rapport au montant 23 de la partie dossier 20 ; à l'autre extrémité, cette fonction est assurée, à l'égard de l'autre montant 22, par un bourrelet 137.

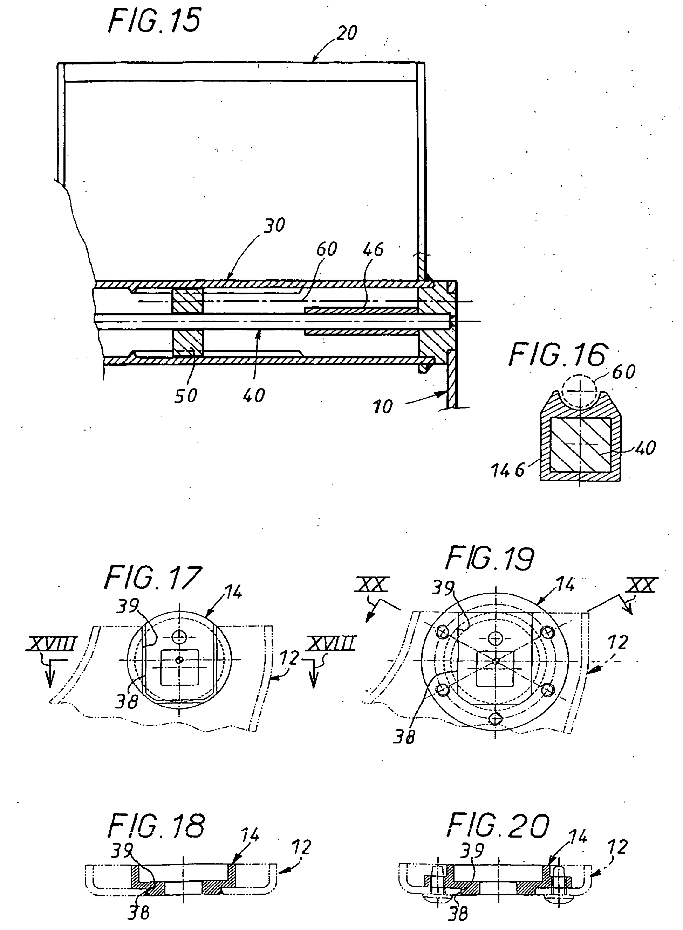

D'autres moyens que l'extrémité élargie 132 des rampes 131 peuvent être prévus pour limiter axialement le déplacement axial de la noix 50 ; sur la figure 15, un fourreau 46, épousant la forme de la barre de torsion, est prévu ; des fourreaux 46 de différentes longueurs permettent de varier la position de butée de la noix 50.

Le fourreau, tel que le fourreau 146 de la figure 16, peut être agencé en sorte d'assurer également le guidage de la tige de réglage 60.

D'autres moyens de butée pour la noix 50 sont possibles, tels que des butées rapportées directement sur la traverse 30, comme des vis par exemple ou des fourreaux emboîtés à force à l'intérieur de la traverse 30.

Lorsque les extrémités des deux montants 22, 23 de la partie dossier 20, figure 2, sont solidarisées par la traverse de raidissement 30, et que les extrémités de celle-ci, qui s'étendent à l'extérieur desdits montants 22 et 23, forment les pivots 24, 25 d'articulation dans les deux paliers 14, 15 emboîtés sur lesdites extrémités, il est avantageux de munir lesdits paliers 14, 15 de moyens de calage, figures 17 à 20, s'étendant en relief sur leur face externe et adaptés à coopérer par complémentarité de forme avec un moyen de réception ménagé dans la zone d'articulation du longeron d'assise 12 ou 13, correspondant, ledit moyen de réception étant de préférence accessible verticalement ; grâce à cette disposition, on peut constituer un sous-ensemble comportant la partie dossier 20, la traverse 30 et ce qui lui est associé, ainsi que les paliers 14, 15 ; il est alors possible de monter le siège dans le véhicule en installant d'abord la partie assise 10 puis en y rapportant le sous-ensemble dossier en descendant les moyens de calage de ce sous-ensemble dans les moyens de réception prévus sur les longerons 12, 13 ; il suffit alors de solidariser moyens de calage et moyens de réception.

Sur les figures 17 et 18, le moyen de calage 38 est un relief de forme générale rectangulaire et le moyen de réception 39 une échancrure globalement de même forme. Les moyens de calage 38 et de réception 39 sont ici solidarisés par soudage.

Sur les figures 19 et 20, les moyens de calage et de réception sont semblables mais ici ils sont solidarisés par vissage.

Comme on l'a vu ci-dessus, le moyen d'absorption d'énergie, sous forme par exemple d'une barre de torsion, est de nature élastique.

Si l'on ne souhaite pas que ce moyen d'absorption d'énergie ne restitue celle-ci après le choc, c'est-à-dire si on veut prévenir un retour brutal du dossier de siège en arrière après sa projection vers l'avant par le poids de l'occupant dans le cas d'un choc frontal du véhicule, un tel retour pouvant s'avérer nuisible aussi bien pour l'occupant du siège que pour un éventuel passager arrière lui-même projeté vers l'avant, là où le dossier revient brutalement, il est souhaitable de limiter l'amplitude de déplacement du dossier. Un blocage mécanique de la barre de torsion par exemple par goupille permettra d'absorber l'effort sans le restituer et éviter ainsi cet effet de catapulte.

Une solution peut également consister en un traitement thermique approprié d'une partie seulement de la barre de torsion, par exemple sa partie centrale ou ses extrémités ou sa partie centrale et une extrémité ; les parties non traitées, plus malléables, se déforment alors d'une façon permanente lors du vrillage de la barre, assurant ainsi la fonction anti-retour ; bien entendu, ceci peut être combiné ou non avec des dispositions selon lesquelles la barre tubulaire a une épaisseur variable ou un diamètre variable.

## Revendications

1. Siège de véhicule automobile adapté à recevoir une ceinture de sécurité et comportant une partie assise (10) et une partie dossier (20) de part et d'autre d'une zone d'articulation, chacune desdites parties (10, 20) comportant une armature avec deux bras (12-13, 22-23) aboutissant à la zone d'articulation, les deux bras (12-13, 22-23) formant respectivement longerons (12, 13) d'assise et montants (22, 23) de dossier, les extrémités des deux bras (22, 23) de l'une (20) desdites parties et les extrémités des deux bras (12, 13) de l'autre (10) partie étant montées chacune à rotation par l'intermédiaire d'un pivot (24, 25) dans un palier (14, 15), le pivot (24, 25) étant porté par une partie (20) et le palier (14, 15) par l'autre partie (10), une traverse (30) tubulaire de raidissement étant ménagée entre les pivots (24, 25) portés par les extrémités du bras (22, 23) de ladite une (20) des parties et un moyen d'absorption d'énergie (40) disposé à l'intérieur de cette traverse (30), le moyen d'absorption d'énergie comportant une barre de torsion (40) et une noix (50) d'accouplement, **caractérisé par le fait que** la barre de torsion (40) se répartit en deux tronçons (43, 44) de part et d'autre de la noix (50), emboîtés chacun par leurs extrémités respectives (41, 42) dans leurs paliers correspondants (15, 14), l'une (41) au moins de l'extrémité de l'un des tronçons (43, 44) étant solidaire axialement et angulairement de son palier (15), et ladite barre de torsion (40) étant attelée par la noix (50) d'accouplement à la traverse (30) tubulaire qui l'enveloppe.

2. Siège selon la revendication 1, **caractérisé par le fait que** les deux tronçons (43, 44) sont adaptés à intervenir, l'un (43) instantanément sans jeu, l'autre (44) de manière différée à la suite d'un débattement déterminé par un jeu.

3. Siège selon la revendication 2, **caractérisé par le fait que** l'on affecte au tronçon (44) intervenant de manière différée un certain jeu dans un sens et un jeu différent dans l'autre.

4. Siège selon l'une des revendications 1 à 3, **caractérisé par le fait que** la traverse tubulaire (30) de forme globalement cylindrique comporte au moins une rampe hélicoïdale (31, 131) coopérant avec au moins une rainure correspondante (51) ménagée sur la noix (50) d'accouplement, la barre de torsion (40) traversant cette noix (50) avec une section non circulaire bloquant tout mouvement relatif de rotation entre noix (50) et barre (40) mais permettant leur libre coulissement relatif.

5. Siège selon la revendication 4, **caractérisé par le fait que**, la noix (50) étant traversée par un trou taraudé (52), une vis (60) parallèle à l'axe (1), libre en rotation mais calée en translation et accessible de l'extérieur par au moins une de ses extrémités, constitue un moyen de réglage fin dit continu de l'inclinaison de la partie dossier (20).

6. Siège selon la revendication 5, **caractérisé en ce que** ladite vis (60) est adaptée à être commandée par l'une et/ou l'autre de ses extrémités.

7. Siège selon l'une des revendications 1 à 3, **caractérisé par le fait que** la barre de torsion (40) est de section de forme non circulaire.

8. Siège selon la revendication 7, **caractérisé par le fait que** la barre de torsion est engagée par l'autre de ses extrémités (42) dans un logement de forme semblable mais de dimensions supérieures de façon à bloquer cette extrémité (42) en rotation seulement au-delà d'un certain angle de rotation.

9. Siège selon la revendication 8, **caractérisé par le fait que** la barre de torsion (40) de section carrée est engagée par son autre extrémité dans un logement (16) de section délimitée par deux carrés centrés sur l'axe et décalés angulairement d'un angle de débattement prédéterminé, le débattement en rotation de chaque sommet de la section de la barre étant délimité par deux portées plates (17) raccordées selon un arc de cercle (18) de diamètre au moins égal à la diagonale de la section du carré de la barre (40).

10. Siège selon la revendication 7, **caractérisé par le fait qu'**un écart ménagé entre les distances séparant la noix d'accouplement (50) des deux extrémités (41, 42) de la barre (40) est utilisé comme moyen d'action sur la répartition des contraintes appliquées en cas de chocs sur les longerons (12, 13) d'assise.

11. Siège selon l'une quelconque des revendications 1 à 10, **caractérisé par le fait que** des fourreaux emboîtés dans la traverse tubulaire (30) ou sur la barre de torsion (40) limitent les déplacements axiaux de la noix (50) d'accouplement.

12. Siège selon l'une des revendications 10 ou 11, **caractérisé par le fait que** des fourreaux (146) montés sur la barre de torsion (40) sont adaptés au guidage de la tige de commande (60) de la noix (50).

13. Siège selon la revendication 4, **caractérisé par le fait que** ladite au moins une rampe hélicoïdale (31, 131) s'étend sur une fraction de la longueur de la traverse (10).

14. Siège selon la revendication 13, **caractérisé par le fait que** l'une des extrémités (132) de la rampe (131) est conformée en butée limitant le déplacement axial de la noix (50).

15. Siège selon l'une quelconque des revendications 1 à 14, **caractérisé par le fait qu'**un dispositif de sélection manuelle de l'angle d'inclinaison de la partie dossier (20) est interposé entre au moins un (15) des paliers portant ladite une (20) des parties et l'extrémité du bras correspondant (13) de ladite autre (10) partie.

16. Siège selon les revendications 6 et 15 prises conjointement, **caractérisé par le fait que**, le dispositif de sélection de l'angle d'inclinaison de la partie dossier (20) comportant un nombre limité de positions de calage angulaire, le moyen de réglage fin est adapté à couvrir de façon continue une plage de réglage sur une étendue angulaire supérieure à l'écart séparant deux positions successives de calage angulaire du dispositif de sélection.

17. Siège selon l'une quelconque des revendications 1 à 16, **caractérisé par le fait que** le ou chaque moyen d'absorption d'énergie est un élément élastique adapté à subir en cas de choc une déformation permanente.

18. Siège selon la revendication 17, **caractérisé par le fait que** l'élément élastique est divisé en au moins deux parties, l'une au moins de ces parties ayant subi un traitement de modification de sa limite d'élasticité.

19. Siège selon l'une des revendications 1 à 18, **caractérisé par le fait que**, les extrémités des deux montants (22, 23) de la partie dossier (20) étant solidarisées par la traverse (30) de raidissement dont les extrémités, s'étendant à l'extérieur des montants (22, 23) de la partie dossier (20), forment pivots (25, 26) d'articulation dans deux paliers (14, 15) emboîtés sur lesdites extrémités, chacun de ces paliers présente en relief sur sa face externe un moyen de calage (38) adapté à coopérer par complémentarité de forme avec un moyen de réception (39) ménagé dans la zone d'articulation du longeron d'assise (12, 13) correspondant.

## Claims

1. Motor vehicle seat adapted to receive a safety belt and comprising a seat base portion (10) and a seat back portion (20) on either side of a hinge zone, each of said portions (10, 20) comprising a frame with two arms (12, 13; 22, 23) ending at the hinge zone, the two arms (12, 13; 22, 23) respectively forming seat base side members (12, 13) and seat back upright members (22, 23), the ends of the two arms (22, 23) of one (20) of said portions and the ends of the two arms (12, 13) of the other portion (10) being assembled such that each can rotate by means of a pivot (24, 25) in a bearing (14, 15), the pivot (24, 25) being carried by one portion (20) and the bearing (14, 15) being carried by the other portion (10), a tubular stiffening cross member (30) being arranged between the pivots (24, 25) carried by the ends of the arms (22, 23) of said one (20) of the portions and a means for absorbing energy (40) disposed inside this cross member (30), the means for absorbing energy comprising a torsion bar (40) and a coupling boss (50), **characterised in that** the torsion bar (40) is divided into two sections (43, 44) on either side of the boss (50), each fitted by their respective ends (41, 42) into their corresponding bearings (15, 14), at least one end (41) of one of the sections (43, 44) being axially and angularly connected to its bearing (15), and said torsion bar (40) being linked by the coupling boss (50) to the tubular cross member (30) that contains it.

2. Seat according to claim 1, **characterised in that** the two sections (43, 44) are adapted to act, the one (43) instantly without free movement, the other (44) in a delayed manner after a certain amount of travel determined by free movement.

3. Seat according to claim 2, **characterised in that** the section (44) acting in a delayed manner is assigned a certain amount of free movement in one direction and a different amount of free movement in the other direction.

4. Seat according to any one of claims 1 to 3, **characterised in that** the tubular cross member (30) of essentially cylindrical shape comprises at least one helicoidal track (31, 131) cooperating with at least one corresponding groove (51) made in the coupling boss (50), the torsion bar (40) passing through this boss (50) having a non-circular cross section preventing any relative rotary movement between boss (50) and bar (40) but allowing them to slide freely relative to each other.

5. Seat according to claim 4, **characterised in that** the boss (50), having a threaded hole (52) passing through it, a screw (60) parallel to the axis (1), free to rotate but retained laterally and accessible from the outside by at least one of its ends, constitutes a means for fine adjustment, known as continuous adjustment, of the inclination of the seat back portion (20).

6. Seat according to claim 5, **characterised in that** said screw (60) is adapted to be controlled by one and/or the other of its ends.

7. Seat according to any one of claims 1 to 3, **characterised in that** the torsion bar (40) has a cross section of non-circular shape.

8. Seat according to claim 7, **characterised in that** the torsion bar is engaged by its other end (42) in a hole of similar shape but having larger dimensions in such a way as to prevent that end (42) rotating only beyond a certain angle of rotation.

9. Seat according to claim 8, **characterised in that** the square cross section torsion bar (40) is engaged by its other end in a hole (16) having a cross section described by two squares centred on the axis and angularly displaced by a predetermined angle of travel, the rotary travel of each corner of the cross section of the bar being limited by two flat bearing surfaces (17) connected by an arc of a circle (18) having a diameter at least equal to the diagonal of the square cross section of the bar (40).

10. Seat according to claim 7, **characterised in that** a difference arranged between the distances separating the coupling boss (50) from the two ends (41, 42) of the bar (40) is used as a means for acting on the distribution of the forces applied in impacts to the seat base side members (12, 13).

11. Seat according to any one of claims 1 to 10, **characterised in that** sleeves fitted in the tubular cross member (30) or on the torsion bar (40) limit the axial displacements of the coupling boss (50).

12. Seat according to either of claims 10 or 11, **characterised in that** sleeves (146) assembled on the torsion bar (40) are adapted to guide the control rod (60) of the boss (50).

13. Seat according to claim 4, **characterised in that** said at least one helicoidal track (31, 131) extends over a part of the length of the cross member (10).

14. Seat according to claim 13, **characterised in that** one of the ends (132) of the track (131) is shaped into a stop limiting the axial displacement of the boss (50).

15. Seat according to any one of claims 1 to 14, **characterised in that** a device for manual selection of the angle of inclination of the seat back portion (20) is placed between at least one of the bearings (15) carrying said one (20) of the portions and the end of the corresponding arm (13) of said other portion (10).

16. Seat according to claims 6 and 15 combined, **characterised in that**, the device for the selection of the angle of inclination of the seat back portion (20) comprising a limited number of angular locking positions, the means of fine adjustment is adapted to cover continuously one adjustment range over an angular span which is greater than the distance separating two successive angular locking positions of the selection device.

17. Seat according to any one of claims 1 to 16, **characterised in that** the one or each means for absorbing energy is an elastic element adapted to undergo permanent deformation in an impact.

18. Seat according to claim 17, **characterised in that** the elastic element is divided into at least two portions, one at least of these portions having undergone a treatment to modify its yield point.

19. Seat according to any one of claims 1 to 18, **characterised in that**, the ends of the two upright members (22, 23) of the seat back portion (20) being connected by the stiffening cross member (30) of which the ends, extending outside the upright members (22, 23) of the seat back portion (20), form hinge pivots (25, 26) in two bearings (14, 15) fitted on said ends, each of these bearings has projecting from its external face a locking means (38) adapted to cooperate by complementarity of shape with a receiving means (39) made in the hinge zone of the corresponding seat base side member (12, 13).

## Patentansprüche

1. Fahrzeugsitz, der angepasst ist, um einen Sicherheitsgurt aufzunehmen und einen Sitzteil (10) und einen Rückenlehnenteil (20) zu beiden Seiten einer Anlenkzone aufweist, wobei jeder der Teile (10, 20) eine Bewehrung mit zwei Armen (12-13, 22-23) aufweist, die in der Anlenkzone ankommt, wobei die zwei Arme (12-13, 22-23) jeweils Sitzlängsbalken (12, 13) und Rückenlehnenstreben (22, 23) bilden, wobei die Enden der zwei Arme (22, 23) des einen (20) der Teile und die Enden der zwei Arme (12, 13) des anderen (10) Teils jeweils mit Drehung über einen Zapfen (24, 25) in einem Lager (14, 15) montiert sind, wobei der Zapfen (24, 25) von einem Teil (20) und das Lager (14, 15) von dem anderen Teil (10) getragen werden, wobei ein röhrenförmiger Versteifungsquerbalken (30) zwischen den Zapfen (24, 25), die von den Enden der Arme (22, 23) des einen (20) der Teile getragen werden, und einem Energieabsorptionsmittel (40) im Inneren dieses Querbalkens (30) angeordnet ist, wobei das Energieabsorptionsmittel eine Torsionsstange (40) und eine Kopplungsnuss (50) aufweist, **dadurch gekennzeichnet, dass** sich die Torsionsstange (40) in zwei Abschnitte (43, 44) zu jeweils einer Seite der Nuss (50) aufteilt, die an ihren jeweiligen Enden (41, 42) in ihre entsprechenden Lager (15, 14) eingesetzt sind, wobei mindestens eines (41) der Enden eines der Abschnitte (43, 44) axial und winkelig fest mit seinem Lager (15) verbunden ist, und wobei die Torsionsstange (40) durch die Kopplungsnuss (50) mit dem röhrenförmigen Querbalken (30), der ihn umgibt, gekoppelt ist.

2. Sitz nach Anspruch 1, **dadurch gekennzeichnet, dass** die zwei Abschnitte (43, 44) jeweils einer (43) sofort und ohne Spiel und der andere (44) verzögert im Anschluss an ein von einem Spiel bestimmtes Ausschlagen eingreifen können.

3. Sitz nach Anspruch 2, **dadurch gekennzeichnet, dass** man dem Abschnitt (44), der verzögert eingreift, ein bestimmtes Spiel in eine Richtung und ein unterschiedliches Spiel in die andere Richtung zuweist.

4. Sitz nach einem der Ansprüche 1 bis 3, **dadurch gekennzeichnet, dass** der röhrenförmige Querbalken (30) mit insgesamt zylindrischer Form mindestens eine Schraubenrampe (31, 131) aufweist, die mit mindestens einer entsprechenden Rille (51) zusammenwirkt, die auf der Kopplungsnuss (50) eingerichtet ist, wobei die Torsionsstange (40) diese Kopplungsnuss (50) mit einem nicht kreisförmigen Querschnitt, der jede relative Rotationsbewegung zwischen der Kopplungsnuss (50) und der Torsionsstange (40) blockiert, jedoch deren relatives freies Gleiten erlaubt, durchquert.

5. Sitz nach Anspruch 4, **dadurch gekennzeichnet, dass**, da die Kopplungsnuss (50) von einer Gewindebohrung (52) durchquert ist, eine Schraube (60), die zu der Achse (1), die in Drehung frei aber in Verschiebung verkeilt und von außen her über mindestens eines ihrer Enden zugänglich ist, parallel ist, ein so genanntes kontinuierliches Feineinstellmittel der Neigung des Rückenlehnenteils (20) bildet.

6. Sitz nach Anspruch 5, **dadurch gekennzeichnet, dass** die Schraube (60) von dem einen und/oder dem anderen ihrer Enden her gesteuert werden kann.

7. Sitz nach einem der Ansprüche 1 bis 3, **dadurch gekennzeichnet, dass** die Torsionsstange (40) einen Querschnitt mit nicht kreisförmiger Form hat.

8. Sitz nach Anspruch 7, **dadurch gekennzeichnet, dass** die Torsionsstange mit dem anderen ihrer Enden (42) in eine Aufnahme mit ähnlicher Form jedoch mit größeren Maßen eingeführt ist, so dass dieses Ende (42) in Drehung nur bis zu einem bestimmten Drehwinkel blockiert ist.

9. Sitz nach Anspruch 8, **dadurch gekennzeichnet, dass** die Torsionsstange (40) mit Quadratquerschnitt an ihrem anderen Ende in eine Aufnahme (16) mit einem Querschnitt eingefügt ist, der von zwei Quadraten abgegrenzt wird, die auf der Achse zentriert und winkelig um einen vorbestimmten Ausschlagwinkel versetzt sind, wobei der Ausschlag in Drehung jedes Gipfels des Querschnitts der Stange von zwei ebenen Auflagen (17) begrenzt ist, die entlang eines Kreisbogens (18) mit einem Durchmesser von mindestens gleich der Diagonalen des Querschnitts des Quadrats der Stange (40) angeschlossen sind.

10. Sitz nach Anspruch 7, **dadurch gekennzeichnet, dass** ein Abstand, der zwischen den Entfernungen, die die Kopplungsnuss (50) von den zwei Enden (41, 42) der Stange (40) trennen, eingerichtet ist, als Mittel zum Einwirken auf die Verteilung der Belastungen, die bei Aufprallen auf die Sitzlängsbalken (12, 13) angelegt werden, verwendet wird.

11. Sitz nach einem der Ansprüche 1 bis 10, **dadurch gekennzeichnet, dass** Hülsen, die in den röhrenförmigen Querbalken (30) oder in die Torsionsstange (40) eingefügt sind, die axialen Verschiebungen der Kopplungsnuss (50) einschränken.

12. Sitz nach einem der Ansprüche 10 oder 11, **dadurch gekennzeichnet, dass** Hülsen (146), die auf die Torsionsstange (40) montiert sind, zum Führen des Steuerschafts (60) der Kopplungsnuss (50) geeignet sind.

13. Sitz nach Anspruch 4, **dadurch gekennzeichnet, dass** sich die mindestens eine Schraubenrampe (31, 131) über einen Bruchteil der Länge des Querbalkens (10) erstreckt.

14. Sitz nach Anspruch 13, **dadurch gekennzeichnet, dass** das eine der Enden (132) der Rampe (131) als Anschlag ausgebildet ist, der das axiale Verschieben der Kopplungsnuss (50) einschränkt.

15. Sitz nach einem der Ansprüche 1 bis 14,
**dadurch gekennzeichnet, dass** eine Vorrichtung zum manuellen Auswählen des Neigungswinkels des Rückenteils (20) zwischen mindestens eines (15) der Lager, die einen (20) der Teile und das Ende des entsprechenden Arms (13) des anderen (10) Teils tragen, eingefügt ist.

16. Sitz nach Anspruch 6 und 15 gemeinsam genommen, **dadurch gekennzeichnet, dass**, da die Vorrichtung zur Auswahl des Neigungswinkels des Rückenteils (20) eine eingeschränkte Anzahl von Winkelverteilungspositionen aufweist, das Feineinstellmittel kontinuierlich einen Einstellbereich über einen Winkelbereich decken kann, der größer ist als der Abstand, der zwei aufeinander folgende Positionen der Winkelverteilung der Auswahlvorrichtung trennt.

17. Sitz nach einem der Ansprüche 1 bis 16, **dadurch gekennzeichnet, dass** das oder jedes Energieabsorptionsmittel ein elastisches Element ist, das bei einem Aufprall eine ständige Verformung erfahren kann.

18. Sitz nach Anspruch 17, **dadurch gekennzeichnet, dass** das elastische Element in mindestens zwei Teile unterteilt ist, wobei mindestens einer dieser Teile eine Behandlung zur Modifizierung seiner Streckgrenze erhalten hat.

19. Sitz nach einem der Ansprüche 1 bis 18, **dadurch gekennzeichnet, dass**, da die Enden der zwei Streben (22, 23) des Rückenlehnenteils (20) durch den Versteifungsquerbalken (30) fest verbunden sind, dessen Enden, die sich außerhalb der Streben (22, 23) des Rückenlehnenteils (20) erstrecken, Zapfen (25, 26) zum Anlenken in zwei Lagern (14, 15) bilden, die in die Enden eingefügt sind, wobei jedes dieser Lager im Relief auf seiner Außenseite ein Verkeilungsmittel (38) aufweist, das formkomplementär mit einem Aufnahmemittel (39) zusammenwirken kann, das in der Anlenkzone des entsprechenden Sitzlängsbalkens (12, 13) eingerichtet ist.
